# FASCICULE DE BREVET EUROPEEN

(11) **EP 2 982 036 B1**
(45) Date de publication et mention de la délivrance du brevet: **06.05.2020**
(21) Numéro de dépôt: 14721916.6
(22) Date de dépôt: 03.04.2014
(51) Int. Cl.: H02P 25/22, H02P 27/08, H02M 7/493

(54) **DISPOSITIF DE COMMANDE D'UN ONDULEUR POLYPHASE**
VORRICHTUNG ZUR STEUERUNG EINES MEHRPHASIGEN WECHSELRICHTERS
DEVICE FOR CONTROLLING A POLYPHASE INVERTER

(30) Priorité: 05.04.2013 FR 1353099
(43) Date de publication de la demande: 10.02.2016
(73) Titulaire: Valeo Equipements Electriques Moteur, 94046 Créteil Cedex (FR)
(72) Inventeur: DUGUEY, Jean-François, F-94230 Cachan (FR); KONAN, Gilbert, F-94000 Creteil (FR); BERNARD, François-Xavier, F-94000 Creteil (FR); PEREIRA, Daniel, F-94260 Fresnes (FR); DOMENGER, Laurent, F-94600 Choisy Le Roi (FR); AZIZI SAMIR, Abdelaziz, F-94320 Thiais (FR); TRAN, Son Ha, F-94000 Creteil (FR)
(74) Mandataire: Mozelle, Gérard Jacques
(86) Numéro de dépôt international: PCT/FR2014/050800
(87) Numéro de publication internationale: WO 2014/162101

(56) Documents cités:
- JP-A- 2001 197 779
- JP-A- 2008 092 739
- US-A1- 2010 072 928
- MAROUANI K ET AL: "Switching losses and harmonic currents evaluation of PWM techniques for VSI-fed dual stator induction motor drive", CONTROL AND AUTOMATION, 2009. MED '09. 17TH MEDITERRANEAN CONFERENCE ON, IEEE, PISCATAWAY, NJ, USA, 24 juin 2009 (2009-06-24), pages 1492-1497, XP031490313, ISBN: 978-1-4244-4684-1
- KHOUDIR MAROUANI ET AL: "Discontinuous SVPWM Techniques for Double Star Induction Motor Drive Control", IEEE INDUSTRIAL ELECTRONICS, IECON 2006 - 32ND ANNUAL CONFERENCE ON, IEEE, PISCATAWAY, NJ, USA, 1 novembre 2006 (2006-11-01), pages 902-907, XP031077131, ISBN: 978-1-4244-0135-2

## Description

### DOMAINE TECHNIQUE DE L'INVENTION.

La présente invention concerne un dispositif de commande d'un onduleur polyphasé destiné à alimenter à partir d'une source de courant continu une machine électrique tournante double triphasée, c'est-à-dire une machine comportant un stator avec deux enroulements triphasés décalés angulairement l'un par rapport à l'autre.

L'invention concerne également une machine électrique tournante double triphasée comportant un onduleur intégré muni de ce dispositif, notamment pour des applications dans des véhicules automobiles.

### ARRIERE PLAN TECHNOLOGIQUE DE L'INVENTION.

Un onduleur permet de générer à partir d'une source de courant continu les courants polyphasés nécessaires au fonctionnement d'une machine électrique tournante polyphasée.

Généralement un onduleur comprend des éléments de commutation formant plusieurs bras de puissance, comportant chacun deux éléments de commutation dans une architecture classique de pont à deux niveaux.

Le point milieu d'un couple d'éléments de commutation d'un même bras de puissance est relié à un enroulement de phase du stator de la machine électrique tournante.

Les éléments de commutation sont pilotés le plus souvent par des procédés de modulation de largeur d'impulsion dits MLI (ou PWM en anglais, acronyme de "Pulse Width Modulation") permettant d'appliquer à la machine électrique tournante des tensions entre phases de forme sinusoïdale.

Le procédé de modulation de largeur d'impulsion vectorielle (MLI vectorielle ou SVM en terminologie anglaise, acronyme de "Space Vector Modulation") est très employé et permet un gain de 15% par rapport au procédé MLI sinusoïdal conventionnel.

Dans l'état de la technique, on connaît d'autres types de procédés de pilotage d'un onduleur polyphasé, notamment un procédé de modulation de largeur d'impulsion discontinue généralisée (MLI discontinue généralisée ou GDPWM en terminologie anglaise, acronyme de "Generalized Discontinuous Pulse Width Modulation"), décrit par exemple dans l'article "A High-Performance Discontinuous PWM Algorithm", A.M. Hava et al., IEEE Trans. on Industry Applications, vol. 34, n° 5, septembre/ octobre 1998, p. 1059 - 1071.

Ce procédé de pilotage bloque tour à tour un des bras de puissance sur une période électrique.

La comparaison entre les différents procédés de MLI en termes de rendement a donné lieu à une littérature technique abondante.

Parmi les études orientées vers les applications dans les véhicules automobiles, on peut citer l'article "A Comparaison between Pulse Width Modulation Stratégies in terms of Power Losses in a Three-Phased Inverter-Application to a Starter Generator", J. Hobraiche, J.P Vilain, M. Chemin, Congrès European Power Electronics - Power Electronics and Motion Control, Riga, Lettonie, septembre 2004.

Les pertes dans l'onduleur sont comparées pour les deux procédés SVM et GDPWM en fonction des points de fonctionnement d'un alterno-démarreur.

Par ailleurs, l'augmentation de puissance des équipements embarqués dans les véhicules pose de nouveaux problèmes de compatibilité électromagnétique (CEM), notamment ceux relatifs aux perturbations conduites.

Pour stabiliser une tension d'alimentation en amont de l'onduleur, la source de courant comporte généralement un condensateur de découplage qui permet de filtrer le courant d'entrée de l'onduleur qui subit de fortes discontinuités du fait du hachage opéré par les éléments de commutation.

La demande de brevet français FR2895598 par la société VALEO EQUIPEMENTS ELECTRIQUES MOTEUR décrit un procédé spécifique de commande MLI d'un onduleur polyphasé qui permet à la fois une réduction des pertes par commutation et une diminution d'un courant efficace dans le condensateur de découplage de manière à diminuer les ondulations de la tension d'alimentation.

Le procédé de commande MLI décrit dans cette demande s'applique à des charges électriques polyphasées en général, alors que la plupart des études, ainsi que les articles cités ci-dessus, se limitent à des machines électriques triphasées.

Il est connu que les machines électriques tournantes polyphasées présentent des avantages sur les machines triphasées en termes de réduction des oscillations du couple en mode moteur, ou de facilité d'élimination des harmoniques en mode générateur.

Il existe donc un besoin pour des études portant sur des commande MLI, en termes de réduction des pertes par commutation et de diminution des perturbations conduites pour des machines polyphasées.

Cependant, l'augmentation du nombre de phases entraîne une augmentation de la complexité d'un dispositif de pilotage de la machine et l'entité inventive a porté son attention sur des machines double triphasées, qui permettent une simplification du dispositif de commande par rapport à des machines hexaphasées en général, et qui autorisent une extrapolation des résultats des études menées sur les machines triphasées, tels que ceux publiés par J. Hobraiche *et al.* dans l'article cité ci-dessus.

### DESCRIPTION GENERALE DE L'INVENTION.

En vue d'applications dans le domaine très concurrentiel de l'automobile, le but de la présente invention est par conséquent l'optimisation d'un dispositif de commande MLI.

L'invention concerne donc un dispositif de commande d'un onduleur polyphasé destiné à alimenter à partir d'une source de courant continu une machine électrique tournante double triphasée, le dispositif étant du type de ceux comprenant des moyens de génération de signaux de commutation pilotant des éléments de commutation de manière à obtenir une réduction des pertes dans les éléments de commutation et une diminution d'un courant efficace dans un condensateur de découplage de la source, la machine électrique tournante double triphasée comportant trois premiers et trois seconds enroulements de phase formant un premier système triphasé et un second système triphasé à points neutres distincts décalés angulairement d'un angle de décalage prédéterminé, et les premiers et seconds enroulements de phase étant reliés respectivement à trois premiers et trois seconds bras de puissance formés par les éléments de commutation d'un onduleur polyphasé.

Conformément à l'invention, le dispositif comprend également :
- des moyens de mémorisation d'un ensemble d'au moins deux stratégies de commandes déterminant les signaux de commutation ;
- des moyens d'acquisition d'une vitesse de rotation et d'un facteur de puissance de la machine ; et
- des moyens de sélection d'une stratégie courante parmi l'ensemble de stratégies de commandes en fonction de la vitesse de rotation et du facteur de puissance.

Une première stratégie parmi l'ensemble de stratégies de commandes consiste avantageusement à appliquer sur le premier système triphasé une première modulation de largeur d'impulsion vectorielle centrée décalée d'un délai commun d'une seconde modulation de largeur d'impulsion vectorielle centrée d'une même période appliquée sur le second système triphasé.

Alternativement, une deuxième stratégie parmi l'ensemble de stratégies de commandes consiste de préférence à appliquer sur le premier système triphasé une première modulation de largeur d'impulsion vectorielle décalée d'un délai commun d'une seconde modulation de largeur d'impulsion vectorielle d'une même période appliquée sur le second système triphasé et à bloquer l'un des trois premiers bras et/ ou l'un des trois seconds bras.

Alternativement encore, une troisième stratégie parmi l'ensemble de stratégies de commandes consiste de préférence à appliquer sur le premier système triphasé une première modulation de largeur d'impulsion discontinue généralisée décalée d'un délai commun d'une seconde modulation de largeur d'impulsion discontinue généralisée d'une même période appliquée sur le second système triphasé.

Dans une autre alternative, une quatrième stratégie parmi l'ensemble de stratégies de commandes consiste avantageusement à:
- appliquer sur le premier système triphasé une première modulation de largeur d'impulsion vectorielle centrée et sur le second système triphasé une seconde modulation de largeur d'impulsion vectorielle centrée d'une même période et d'une même origine temporelle;
- à bloquer l'un des trois premiers bras et l'un des trois seconds bras;
- à décaler de premier, deuxième et troisième délais par rapport à cette origine temporelle des fronts de commutation de trois des trois premiers bras et des trois seconds bras non bloqués.

Dans le dispositif selon l'invention, on tire bénéfice du fait que l'on utilise une stratégie courante sélectionnée parmi cet ensemble de stratégies de commandes en fonction d'un point de fonctionnement de la machine polyphasée.

De préférence, la deuxième stratégie est appliquée si une vitesse de rotation de la machine est inférieure à une première vitesse prédéterminée représentative d'une fin d'un démarrage de la machine ou si cette vitesse de rotation est comprise entre cette première vitesse prédéterminée et une deuxième vitesse prédéterminée, représentative d'une fin d'un fonctionnement à couple constant de la machine, supérieure à la première vitesse prédéterminée et si un facteur de puissance de la machine est inférieur ou égal à un coefficient prédéterminé.

De préférence également, et alternativement, la troisième stratégie est appliquée si une vitesse de rotation de la machine est comprise entre une première vitesse prédéterminée représentative d'une fin d'un démarrage de la machine et une deuxième vitesse prédéterminée, représentative d'une fin d'un fonctionnement à couple constant de la machine, supérieure à cette première vitesse prédéterminée et si un facteur de puissance de la machine est supérieur à un coefficient prédéterminé, ou si cette vitesse de rotation est comprise entre cette deuxième vitesse prédéterminée et une troisième vitesse prédéterminée, représentative d'un fonctionnement à puissance constante de la machine, supérieure à cette deuxième vitesse prédéterminée.

L'invention concerne également une machine électrique tournante double triphasée comportant un onduleur intégré muni du dispositif de commande selon l'invention tel que décrit brièvement ci-dessus.

Ces quelques spécifications essentielles auront rendu évidents pour l'homme de métier les avantages apportés par le dispositif de commande d'un onduleur polyphasé selon l'invention, ainsi que par la machine électrique correspondante, par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

La **Figure 1** représente schématiquement une machine électrique tournante double triphasée et un onduleur muni de son dispositif de commande selon l'invention.
Les **Figures 2a, 2b, 2c et 2d** représentent des chronogrammes de la modulation de largeur d'impulsion appliquée sur la machine double triphasée, résultant respectivement d'une première, deuxième, troisième et quatrième stratégies de commandes.
La **Figure 3** montre les points de fonctionnement de la machine double triphasée montrée sur la **Figure 1** pour la sélection des stratégies de commandes montrées sur les **Figures 2a, 2b, 2c et 2d****.**
La **Figure 4** représente un arbre de sélection des stratégies de commandes montrées sur les **Figures 2a, 2b, 2c et 2d** en fonction des points de fonctionnement montrés sur la **Figure 3****.**

### DESCRIPTION DES MODES DE REALISATION PREFERES DE L'INVENTION.

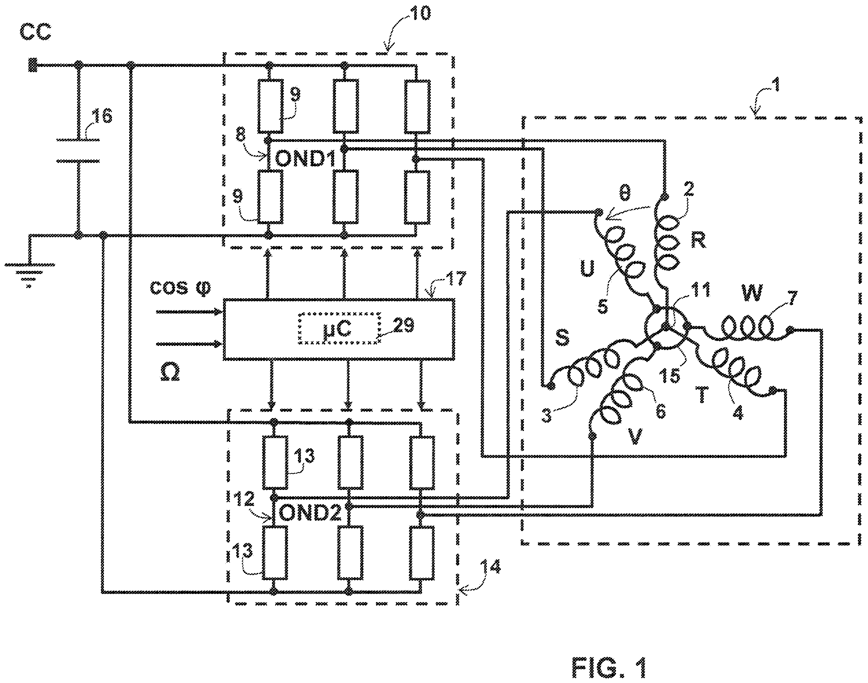

Comme le montre bien la représentation schématique de la **Figure 1****,** dans un mode de réalisation préféré de l'invention, le stator 1 de la machine électrique tournante double triphasée comprend un premier système triphasé en étoile constitué de trois premiers enroulements de phase 2, 3, 4 et un second système triphasé en étoile constitué de trois seconds enroulements de phase 5, 6, 7 décalé l'un par rapport à l'autre d'un angle de décalage θ de 30°.

Les premiers enroulements de phase 2, 3, 4 ont chacun une première extrémité reliée à chacun des premiers points milieu de premiers bras de puissance 8 formés par des éléments de commutation 9 d'un premier module de puissance 10 et une autre première extrémité commune 11.

De la même manière, les seconds enroulements de phase 5, 6, 7 ont chacun une seconde extrémité reliée à chacun des seconds points milieu de seconds bras de puissance 12 formés par d'autres éléments de commutation 13 d'un second module de puissance 14 et une autre seconde extrémité commune 15.

Les première et seconde extrémités communes 11, 15 sont les points neutres des premier et second systèmes triphasés et sont isolés l'un de l'autre.

Les premiers et seconds bras de puissance 8, 12 des premier et second modules de puissance 10, 14 sont connectés en parallèle sur une source de courant continu CC, qui comporte un condensateur de découplage 16.

Les éléments de commutation 9, 13 sont pilotés par un dispositif de commande 17 de manière à commuter des premiers courants de phase R, S, T circulant dans les premiers enroulements de phase 2, 3, 4 et des seconds courants de phase U, V, W circulant dans les seconds enroulements de phase 5, 6, 7 selon des stratégies de commandes implémentées dans l'invention, permettant de faire fonctionner en onduleur hexaphasé les premier et second modules de puissance 10, 14 fonctionnant comme un premier et un second onduleurs triphasés OND1, OND2.

Dans chacun de ces premier et second onduleurs, il est possible de bloquer ou non un bras de puissance 8, 12. Il est également possible de décaler les MLI les unes par rapport aux autres.

L'entité inventive a déterminé que ces stratégies de commandes permettent à la fois de réduire les pertes par commutation dans les éléments de commutation 9, 13, constitués le plus souvent de transistors de type MOS, tout en diminuant un courant efficace que doit absorber le condensateur de découplage 16 en entrée de l'onduleur 10, 14.

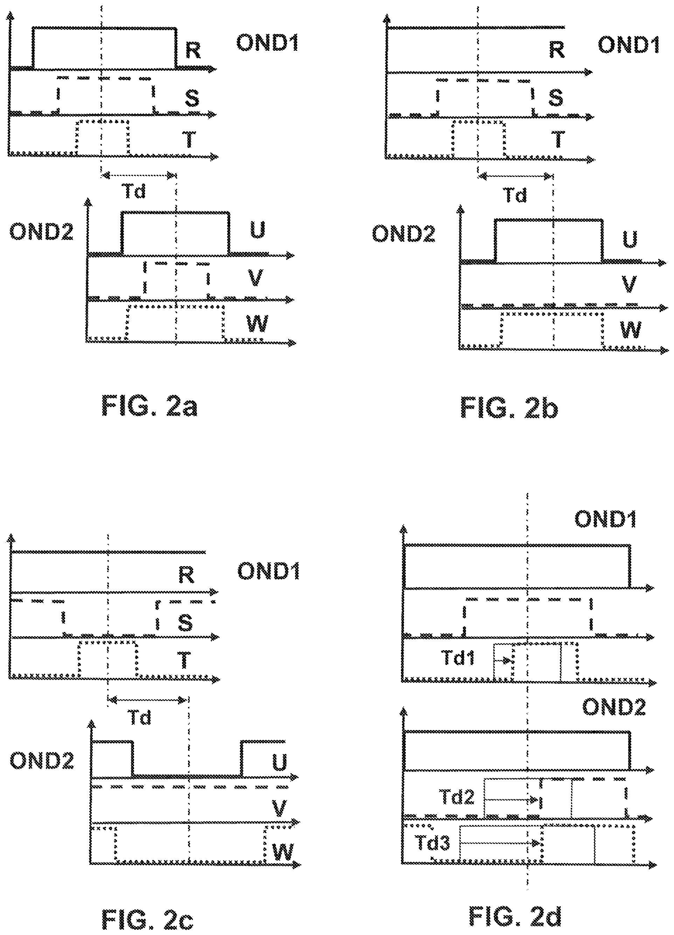

Quatre stratégies de commandes étudiées par l'entité inventive au moyen de simulations sur ordinateur, basées sur des travaux effectués pour des machines triphasées sont décrites en détail ci-après en liaison avec les **Figures 2a, 2b, 2c et 2d****.**

### Stratégie I

Cette première stratégie consiste à appliquer deux MLI vectorielles sans blocage d'un bras de puissance 8, 12.

Les chronogrammes des premiers courants de phase R, S, T générés par le premier onduleur triphasé OND1 et des seconds courants de phase U, V, W générés par le second onduleur triphasé OND2 dans cette première stratégie sont montrés sur la **Figure 2a****.**

Une MLI vectorielle centrée (SVM) est appliquée sur chacun des deux systèmes triphasés.

Les MLI présentent une même période. Elles sont séparées par un délai commun Td, constant ou variable.

### Stratégie II

Cette deuxième stratégie consiste à appliquer deux MLI vectorielles avec blocage d'un ou deux bras de puissance 8, 12.

Les chronogrammes des premiers courants de phase R, S, T générés par le premier onduleur triphasé OND1 et des seconds courants de phase U, V, W générés par le second onduleur triphasé OND2 dans cette deuxième stratégie sont montrés sur la **Figure 2b****.**

Les MLI vectorielles avec un décalage des potentiels des points neutres 11, 15 permettent de bloquer un ou deux des six bras de puissance 8, 12 de l'onduleur 10, 14.

Les MLI présentent une même période. Elles sont séparées par un délai commun Td, constant ou variable.

Les simulations ont montré que le courant efficace dans le condensateur de découplage 16 est fortement baissé quand ce délai commun Td vaut 25% de la période de la MLI.

### Stratégie III

Cette troisième stratégie consiste à appliquer deux MLI discontinues généralisées (GDPWM).

Les chronogrammes des premiers courants de phase R, S, T générés par le premier onduleur triphasé OND1 et des seconds courants de phase U, V, W générés par le second onduleur triphasé OND2 dans cette troisième stratégie sont montrés sur la **Figure 2c****.**

Les deux GDPWM sont appliquées sur chacun des deux systèmes triphasés, c'est-à-dire que:
- blocage dans chacun des deux onduleurs triphasés OND1, OND2 du bras de puissance 8, 12 ayant un courant maximum et pouvant être bloqué;
- deux des MLI restantes sont décalées.

Les MLI présentent une même période. Elles sont séparées par un délai commun Td, constant ou variable.

Les simulations ont montré que le courant dans le condensateur de découplage 16 est fortement baissé quand ce délai commun Td vaut 30% de la période de la MLI.

### Stratégie IV

Cette stratégie consiste à appliquer deux MLI vectorielles centrées (SVM) à MLI décalées et bras de puissance 8, 12 bloqué.

Les chronogrammes des premiers courants de phase R, S, T générés par le premier onduleur triphasé OND1 et des seconds courants de phase U, V, W générés par le second onduleur triphasé OND2 dans cette quatrième stratégie sont montrés sur la **Figure 2d****.**

Les MLI présentent une même période.

Deux des six bras de puissance 8, 12 sont bloqués. Puis trois des quatre MLI sont décalées par des premier, deuxième et troisième délais Td1, Td2, Td3 dont des valeurs sont incluses dans l'intervalle [- 50%, + 50%] de la période de MLI.

Ces décalages sont plus généraux que pour des MLI vectorielles centrées (pour lesquelles les délais sont nuls) et que le GDPWM (pour lesquelles les délais valent 50°).

Conformément au but de l'invention, les stratégies de commandes décrites ci-dessus conduisent à une réduction des pertes dans les éléments de commutation 9 et une diminution du courant efficace dans le condensateur de découplage 16.

L'entité inventive ayant remarqué que les pertes dans ce condensateur de découplage 16 dépendant du déphasage ϕ entre un courant de phase R, S, T; U, V, W et une tension de phase, ainsi que du coefficient de modulation m (défini comme le rapport d'une tension de phase de crête sur la moitié d'une tension d'alimentation de l'onduleur), il existait une voie supplémentaire d'optimisation en sélectionnant dynamiquement une stratégie courante parmi l'ensemble des stratégies de commandes en fonction d'un point de fonctionnement de la machine polyphasée.

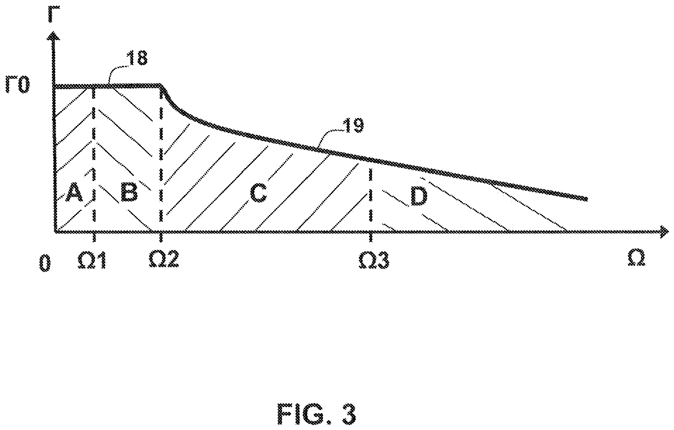

La typologie des différents points de fonctionnement (Couple moteur Γ, Vitesse de rotation Ω) prise en compte pour la sélection des stratégies de commandes est indiquée sur la **Figure 3****:**

### Zone A

Cette première zone A correspond au démarrage de la machine double triphasée 1 fonctionnant à couple moteur constant Γ0 à partir de l'arrêt (vitesse de rotation Ω nulle) jusqu'à une première vitesse de rotation Ω1.

Dans une application de la machine double triphasée 1 considérée comme alterno-démarreur dans un véhicule automobile, cette première zone A correspond typiquement au mode MOTEUR d'une fonction STOP/ START.

La vitesse de rotation Ω et la tension de phase de la machine 1 sont faibles.

### Zone B

Cette deuxième zone B correspond à un mode de fonctionnement de la machine 1 dans lequel la vitesse de rotation Ω est comprise entre la première vitesse de rotation Ω1 et une deuxième vitesse de rotation Ω2 qui marque la fin du fonctionnement à couple constant 18.

Dans une application de la machine double triphasée 1 considérée comme aide à l'accélération dans un véhicule hydride, cette deuxième zone B correspond typiquement à une fonction BOOST.

La vitesse de rotation Ω et la tension de phase de la machine 1 restent faibles, mais le facteur de puissance cos ϕ de la machine 1 peut être faible pour une vitesse de rotation Ω proche de la première vitesse de rotation Ω1 ou voisin de l'unité pour une vitesse de rotation Ω proche de la deuxième vitesse de rotation Ω2.

### Zone C

Cette troisième zone C correspond à un mode de fonctionnement de la machine 1 dans lequel la vitesse de rotation Ω est comprise entre la deuxième vitesse de rotation Ω2 et une troisième vitesse de rotation Ω3 qui est représentative d'un fonctionnement à puissance constante 19.

Dans une application de la machine double triphasée 1 considérée comme aide à l'accélération dans un véhicule hydride, cette troisième zone C correspond typiquement à une fonction BOOST.

La vitesse de rotation Ω et la tension de phase de la machine 1 sont élevées, le facteur de puissance cos ϕ de la machine 1 est voisin de l'unité.

### Zone D

Cette quatrième zone D correspond à un mode de fonctionnement de la machine 1 dans lequel la vitesse de rotation Ω est supérieure à la troisième vitesse de rotation Ω3.

Dans une application de la machine double triphasée 1 considérée comme aide à l'accélération dans un véhicule hydride, cette quatrième zone D correspond typiquement à une fonction BOOST.

La vitesse de rotation Ω de la machine 1 est très élevée et la tension de phase est forte, le facteur de puissance cos ϕ de la machine 1 est voisin de l'unité.

La vitesse de rotation Ω de la machine 1 étant très élevée dans cette quatrième zone D, on remplace une stratégie courante de type MLI par une commande pleine onde.

Cette quatrième zone D ne constitue donc pas un critère de sélection d'une stratégie courante parmi les stratégies de commandes selon l'invention.

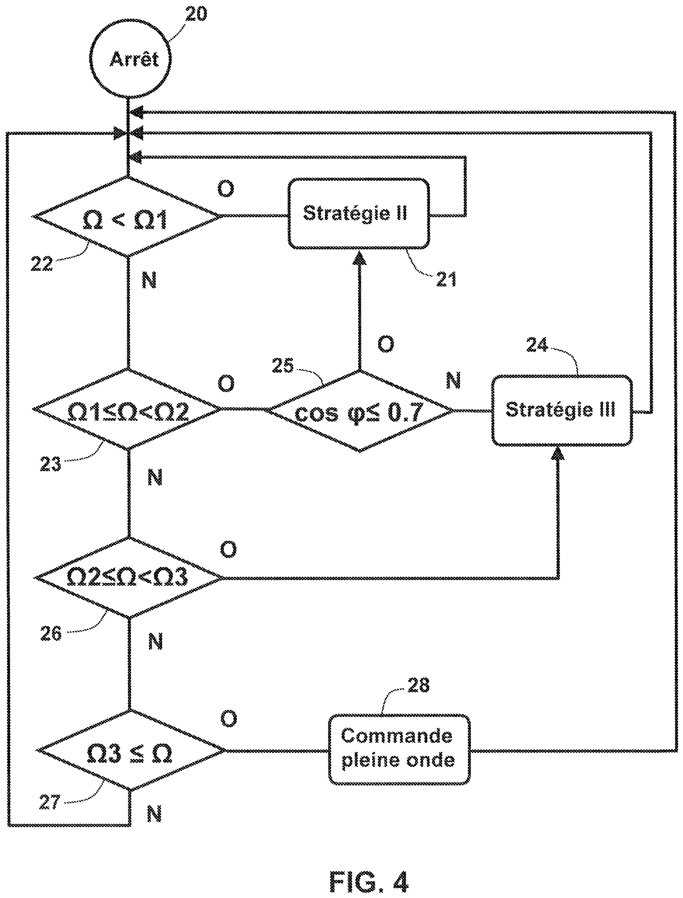

La **Figure 4** montre l'arbre de sélection des stratégies de commandes en fonction zones A, B, C ou D.

Au démarrage de la machine 1, à partir de l'arrêt 20, la deuxième stratégie 21 est sélectionnée par un premier test 22 tant que les points de fonctionnement de la machine 1 appartiennent à la première zone A.

Dans cette première zone A, l'avantage de cette deuxième stratégie 21 est de faire baisser à la fois le courant efficace dans la capacité de découplage 16 et les pertes dans les éléments de commutations 9, 13. Les pertes par commutation sont optimisées.

Quand un deuxième test 23 montre que les points de fonctionnement de la machine 1 appartiennent à la deuxième zone B, la deuxième 21 ou la troisième 24 stratégies sont sélectionnées.

Le choix 25 entre la deuxième stratégie 21 et la troisième stratégie 24 dépend du facteur de puissance cos ϕ de la machine 1 par rapport à un coefficient prédéterminé, de préférence égale à 0,7.

Dans cette deuxième zone B, la deuxième stratégie 21 est sélectionnée si le facteur de puissance cos ϕ est inférieur ou égal à 0,7, tandis que la troisième stratégie 24 est sélectionnée si le facteur de puissance cos ϕ est supérieur à 0,7.

La diminution du courant efficace dans le condensateur de découplage 16 n'est pas optimisée dans cette deuxième zone B, mais elle est importante pour tous les points de fonctionnement. Les pertes par commutation sont réduites.

Quand un troisième test 26 montre que les points de fonctionnement de la machine 1 appartiennent à la troisième zone C, la troisième stratégie 24 est sélectionnée.

Dans cette troisième zone C, La diminution du courant efficace dans le condensateur de découplage 16 est proche de l'optimum. Les pertes par commutation sont également optimisées.

Quand un quatrième test 27 montre que les points de fonctionnement de la machine 1 appartiennent à la quatrième zone D, aucune des stratégies de commandes selon l'invention n'est sélectionnée. Ainsi que cela a déjà été indiqué, une commande pleine onde 28 est utilisée.

Comme il va de soi, l'invention ne se limite pas aux seuls modes de réalisation préférentiels décrits ci-dessus.

Une infinité de stratégies de commandes est possible. L'entité inventive a mis au jour durant les simulations sur ordinateur deux exemples supplémentaires de MLI vectorielles dont les paramétrages dépendent des points de fonctionnement de la machine:

### Exemple 1

On applique deux MLI vectorielles utilisant la quatrième stratégie décrite ci-dessus (**Figure 2d**):
- blocage dans chacun des deux onduleurs triphasés OND1, OND2 du bras de puissance 8, 12 dans lequel le courant est maximum (en valeur absolue) et pouvant être bloqué;
- trois des quatre MLI restantes sont décalées suivant un premier et un second jeux Jeu1, Jeu2 de valeurs des premier, deuxième et troisième délais Td1, Td2, Td3 indiqués dans la **Table I** suivante en pourcentage de la période des MLI;
- le premier jeu Jeu1 est choisi si le déphasage ϕ est compris entre 0 et π/6 (modulo π/3), sinon le second jeu Jeu2 est choisi.

**Table I**

| **Délais** | **Td1** | **Td2** | **Td3** |
|---|---|---|---|
| **Jeu1** | 40% | 20% | 40% |
| **Jeu2** | 40% | 30% | 30% |

Dans ce premier exemple, la diminution du courant efficace dans le condensateur de découplage 16 est optimale pour les points de fonctionnement de la machine 1 où le facteur de puissance est voisin de l'unité (cos ϕ = +/-1) et où le coefficient de modulation m est supérieur à 0,8. Pour les autres points de fonctionnement, la diminution est faible.

Dans ce premier exemple, les pertes par commutation sont quant à elles optimisées pour tous les points de fonctionnement.

Dans une application de la machine double triphasée 1 dans un véhicule hydride, ce premier exemple est avantageusement mis en œuvre dans la troisième zone C, qui correspond typiquement à la fonction BOOST.

### Exemple 2

On applique deux MLI discontinues généralisées (GDPWM) de manière similaire à la troisième stratégie décrite ci-dessus (**Figure 2c**) avec un délai commun Td entre les premier et second onduleurs OND1, OND2 dépendant du déphasage ϕ et du coefficient de modulation m. Une cartographie de ce délai commun Td est donnée dans la **Table II** ci-dessous (en pourcentage de la période des MLI):

**Table II**

| | **0°** | **30°** | **36°** | **45°** | **60°** | **75°** | **90°** |
|---|---|---|---|---|---|---|---|
| **1** | 20% | 20% | 25% | 50% | 50% | 0 | 0 |
| **0,88** | 25% | 10% | 10% | 0 | 0 | 0 | 0 |
| **0,7** | 40% | 0 | 0 | 0 | 40% | 0 | 0 |
| **0,5** | 40% | 20% | 20% | 20% | 25% | 0 | 0 |
| **0,2** | 25% | 25% | 25% | 25% | 25% | 0 | 0 |

Dans ce second exemple, la diminution du courant efficace dans le condensateur de découplage 16 est importante pour les points de fonctionnement de la machine 1 où le facteur de puissance est voisin de l'unité (cos ϕ = +/-1) et où le coefficient de modulation m est proche de 1 (m=1).

Le dispositif de commande 17 selon l'invention comprend avantageusement un microcontrôleur 29 de la société Freescale de type MPC5643L comportant six registres MLI qui sont programmables indépendamment, et qui permettent donc une implémentation aisée des stratégies de commandes décrites ci-dessus.

Les tests effectués par l'entité inventive montrent que le dispositif de commande selon l'invention, avec les sstratégies de commandes mises en oeuvre, conduit à une réduction du courant efficace dans le condensateur de découplage 16 atteignant 63% par rapport à une MLI de base sur une machine simple triphasée.

Les modes de réalisation préférés de l'invention concernent une machine double triphasée présentant un angle de décalage θ égal à 30°. La même analyse pourrait être effectuée pour des machine électriques tournantes double triphasées présentant des angles de décalage θ différents.

Le dispositif de commande selon l'invention fait appel à une logique micro-programmée 29 ou alternativement à une logique câblée ou un système programmé, voire analogique.

L'invention est définie par les revendications ci-après.

## Revendications

1. Dispositif de commande (17) d'un onduleur polyphasé (10, 14, 17) destiné à alimenter à partir d'une source de courant continu (CC) une machine électrique tournante double triphasée (1), ledit dispositif étant du type de ceux comprenant des moyens de génération (29) de signaux de commutation pilotant des éléments de commutation (9, 13) de manière à obtenir une réduction des pertes dans lesdits éléments de commutation (9, 13) et une diminution d'un courant efficace dans un condensateur de découplage (16) de ladite source (CC), ladite machine électrique tournante double triphasée (1) comportant trois premiers et trois seconds enroulements de phase (2, 3, 4; 5, 6, 7) formant un premier système triphasé (2, 3, 4) et un second système triphasé (5, 6, 7) à points neutres distincts (11, 15) décalés angulairement d'un angle de décalage (θ) prédéterminé, et lesdits premiers et seconds enroulements de phase (2, 3, 4; 5, 6, 7) étant reliés respectivement à trois premiers et trois seconds bras de puissance (8, 12) formés par lesdits éléments de commutation (9, 13) dudit d'un onduleur polyphasé (10, 14, 17), **caractérisé en ce qu'**il comprend:
- des moyens de mémorisation (29) d'un ensemble d'au moins deux stratégies de commandes (21, 24) déterminant lesdits signaux de commutation ;
- des moyens d'acquisition d'une vitesse de rotation (Ω) et d'un facteur de puissance (cos ϕ) de ladite machine (1);
- des moyens de sélection d'une stratégie courante parmi ledit ensemble de stratégies de commandes (21, 24) en fonction de ladite vitesse de rotation (Ω) et dudit facteur de puissance (cos ϕ).

2. Dispositif de commande d'un onduleur polyphasé (10, 14, 17) selon la revendication 1, **caractérisé en ce que** ledit ensemble de stratégies de commandes comporte une stratégie consistant à appliquer sur ledit premier système triphasé (2, 3, 4) une première modulation de largeur d'impulsion vectorielle centrée décalée d'un délai commun (Td) d'une seconde modulation de largeur d'impulsion vectorielle centrée d'une même période appliquée sur ledit second système triphasé (5, 6, 7).

3. Dispositif de commande d'un onduleur polyphasé (10, 14, 17) selon la revendication 1, **caractérisé en ce que** ledit ensemble de stratégies de commandes comprend une stratégie (21) consistant à appliquer sur ledit premier système triphasé (2, 3, 4) une première modulation de largeur d'impulsion vectorielle décalée d'un délai commun (Td) d'une seconde modulation de largeur d'impulsion vectorielle d'une même période appliquée sur ledit second système triphasé (5, 6, 7) et à bloquer l'un desdits trois premiers bras (8) et/ ou l'un desdits trois seconds bras (12), ledit délai commun (Td) étant préférentiellement sensiblement égal à 25% de ladite période.

4. Dispositif de commande d'un onduleur polyphasé (10, 14, 17) selon la revendication 1, **caractérisé en ce que** ledit ensemble de stratégies de commandes comprend une stratégie (24) consistant à appliquer sur ledit premier système triphasé (2, 3, 4) une première modulation de largeur d'impulsion discontinue généralisée décalée d'un délai commun (Td) d'une seconde modulation de largeur d'impulsion discontinue généralisée d'une même période appliquée sur ledit second système triphasé (5, 6, 7), ledit délai commun (Td) étant préférentiellement sensiblement égal à 30% de ladite période.

5. Dispositif de commande d'un onduleur polyphasé (10, 14, 17) selon la revendication 1, **caractérisé en ce que** ledit ensemble de stratégies de commandes comprend une stratégie consistant à :
- appliquer sur ledit premier système triphasé (2, 3, 4) une première modulation de largeur d'impulsion vectorielle centrée et sur ledit second système triphasé (5, 6, 7) une seconde modulation de largeur d'impulsion vectorielle centrée d'une même période et d'une même origine temporelle;
- à bloquer l'un desdits trois premiers bras (8) et l'un desdits trois seconds bras (12);
- à décaler de premier, deuxième et troisième délais (Td1, Td2, Td3) par rapport à ladite origine temporelle des fronts de commutation de trois desdits trois premiers bras (8) et desdits trois seconds bras (12) non bloqués.

6. Dispositif de commande d'un onduleur polyphasé (10, 14, 17) selon la revendication 3, **caractérisé en ce que** ladite stratégie (21) est appliquée si une vitesse de rotation (Ω) de ladite machine (1) est inférieure à une première vitesse prédéterminée (Ω1) représentative d'une fin d'un démarrage (A) de ladite machine (1) ou si ladite vitesse de rotation (Ω) est comprise entre ladite première vitesse prédéterminée (Ω1) et une deuxième vitesse prédéterminée (Ω2), représentative d'une fin d'un fonctionnement à couple constant (B) de ladite machine (1), supérieure à ladite première vitesse prédéterminée (Ω1) et si un facteur de puissance (cos ϕ) de ladite machine (1) est inférieur ou égal à un coefficient prédéterminé, de préférence sensiblement égal à 0,7.

7. Dispositif de commande d'un onduleur polyphasé (10, 14, 17) selon la revendication 4, **caractérisé en ce que** ladite stratégie (24) est appliquée si une vitesse de rotation (Ω) de ladite machine (1) est comprise entre une première vitesse prédéterminée (Ω1) représentative d'une fin d'un démarrage (A) de ladite machine (1) et une deuxième vitesse prédéterminée (Ω2), représentative d'une fin d'un fonctionnement à couple constant (B) de ladite machine (1), supérieure à ladite première vitesse prédéterminée (Ω1) et si un facteur de puissance (cos ϕ) de ladite machine (1) est supérieur à un coefficient prédéterminé, de préférence sensiblement égal à 0,7, ou si ladite vitesse de rotation (Ω) est comprise entre ladite deuxième vitesse prédéterminée (Ω2) et une troisième vitesse prédéterminée (Ω3), représentative d'un fonctionnement à puissance constante (C) de ladite machine, supérieure à ladite deuxième vitesse prédéterminée (Ω2).

8. Machine électrique tournante double triphasée (1), **caractérisée en ce qu'**elle comporte un onduleur intégré (10, 14, 17) muni du dispositif de commande (17) selon l'une quelconque des revendications 1 à 7.

## Patentansprüche

1. Vorrichtung (17) zur Steuerung eines mehrphasigen Wechselrichters (10, 14, 17), der dazu bestimmt ist, eine doppel-dreiphasige rotierende elektrische Maschine (1) ausgehend von einer Gleichstromquelle (CC) mit Strom zu versorgen, wobei die Vorrichtung von dem Typ ist, der Mittel (29) zum Erzeugen von Schaltsignalen, die Schaltelemente (9, 13) ansteuern, beinhaltet, um eine Reduzierung der Verluste in den Schaltelementen (9, 13) und eine Verringerung eines Effektivstroms in einem Entkopplungskondensator (16) der Quelle (CC) zu erhalten, wobei die doppel-dreiphasige rotierende elektrische Maschine (1) drei erste und drei zweite Phasenwicklungen (2, 3, 4; 5, 6, 7) umfasst, die ein erstes dreiphasiges System (2, 3, 4) und ein zweites dreiphasiges System (5, 6, 7) mit unterschiedlichen Sternpunkten (11, 15) bilden, die um einen vorbestimmten Versatzwinkel (θ) winkelförmig voneinander versetzt sind, und wobei die ersten und zweiten Phasenwicklungen (2, 3, 4; 5, 6, 7) jeweils mit drei ersten und drei zweiten Leistungszweigen (8, 12) verbunden sind, die durch die Schaltelemente (9, 13) des mehrphasigen Wechselrichters (10, 14, 17) gebildet werden, **dadurch gekennzeichnet, dass** sie Folgendes beinhaltet:
- Mittel (29) zum Speichern eines Satzes von mindestens zwei Steuerstrategien (21, 24), die die Schaltsignale bestimmen;
- Mittel zum Erfassen einer Drehgeschwindigkeit (Ω) und eines Leistungsfaktors (cos ϕ) der Maschine (1);
- Mittel zum Auswählen einer aktuellen Strategie aus dem Satz von Steuerstrategien (21, 24) in Abhängigkeit von der Drehgeschwindigkeit (Ω) und dem Leistungsfaktor (cos ϕ).

2. Vorrichtung zur Steuerung eines mehrphasigen Wechselrichters (10, 14, 17) nach Anspruch 1, **dadurch gekennzeichnet, dass** der Satz von Steuerstrategien eine Strategie umfasst, die darin besteht, auf das erste dreiphasige System (2, 3, 4) eine erste zentrierte Raumzeigermodulation anzuwenden, die von einer zweiten zentrierten Raumzeigermodulation einer gleichen Periode, die auf das zweite dreiphasige System (5, 6, 7) angewendet wird, um eine gemeinsame Zeitspanne (Td) versetzt ist.

3. Vorrichtung zur Steuerung eines mehrphasigen Wechselrichters (10, 14, 17) nach Anspruch 1, **dadurch gekennzeichnet, dass** der Satz von Steuerstrategien eine Strategie (21) beinhaltet, die darin besteht, auf das erste dreiphasige System (2, 3, 4) eine erste Raumzeigermodulation anzuwenden, die von einer zweiten Raumzeigermodulation einer gleichen Periode, die auf das zweite dreiphasige System (5, 6, 7) angewendet wird, um eine gemeinsame Zeitspanne (Td) versetzt ist, und einen der drei ersten Zweige (8) und/oder einen der drei zweiten Zweige (12) zu sperren, wobei die gemeinsame Zeitspanne (Td) vorzugsweise im Wesentlichen gleich 25 % der Periode ist.

4. Vorrichtung zur Steuerung eines mehrphasigen Wechselrichters (10, 14, 17) nach Anspruch 1, **dadurch gekennzeichnet, dass** der Satz von Steuerstrategien eine Strategie (24) beinhaltet, die darin besteht, auf das erste dreiphasige System (2, 3, 4) eine erste generalisierte diskontinuierliche Pulsweitenmodulation anzuwenden, die von einer zweiten generalisierten diskontinuierlichen Pulsweitenmodulation einer gleichen Periode, die auf das zweite dreiphasige System (5, 6, 7) angewendet wird, um eine gemeinsame Zeitspanne (Td) versetzt ist, wobei die gemeinsame Zeitspanne (Td) vorzugsweise im Wesentlichen gleich 30 % der Periode ist.

5. Vorrichtung zur Steuerung eines mehrphasigen Wechselrichters (10, 14, 17) nach Anspruch 1, **dadurch gekennzeichnet, dass** der Satz von Steuerstrategien eine Strategie beinhaltet, die aus Folgendem besteht:
- Anwenden einer ersten zentrierten Raumzeigermodulation auf das erste dreiphasige System (2, 3, 4) und einer zweiten zentrierten Raumzeigermodulation einer gleichen Periode und eines gleichen zeitlichen Ursprungs auf das zweite dreiphasige System (5, 6, 7);
- Sperren von einem der drei ersten Zweige (8) und von einem der drei zweiten Zweige (12);
- Versetzen von Schaltflanken von drei der drei nicht gesperrten ersten Zweige (8) und der drei nicht gesperrten zweiten Zweige (12) um eine erste, zweite und dritte Zeitspanne (Td1, Td2, Td3) in Bezug auf den zeitlichen Ursprung.

6. Vorrichtung zur Steuerung eines mehrphasigen Wechselrichters (10, 14, 17) nach Anspruch 3, **dadurch gekennzeichnet, dass** die Strategie (21) angewendet wird, wenn eine Drehgeschwindigkeit (Ω) der Maschine (1) kleiner als eine erste vorgegebene Geschwindigkeit (Ω1), die für ein Ende eines Anfahrvorgangs (A) der Maschine (1) repräsentativ ist, ist oder wenn die Drehgeschwindigkeit (Ω) zwischen der ersten vorgegebenen Geschwindigkeit (Ω1) und einer zweiten vorgegebenen Geschwindigkeit (Ω2), die für ein Ende eines Betriebs mit konstantem Drehmoment (B) der Maschine (1) repräsentativ ist und größer als die erste vorgegebene Geschwindigkeit (Ω1) ist, liegt und wenn ein Leistungsfaktor (cos ϕ) der Maschine (1) kleiner als oder gleich einem vorgegebenen Koeffizienten, vorzugsweise im Wesentlichen gleich 0,7, ist.

7. Vorrichtung zur Steuerung eines mehrphasigen Wechselrichters (10, 14, 17) nach Anspruch 4, **dadurch gekennzeichnet, dass** die Strategie (24) angewendet wird, wenn eine Drehgeschwindigkeit (Ω) der Maschine (1) zwischen einer ersten vorgegebenen Geschwindigkeit (Ω1), die für ein Ende eines Anfahrvorgangs (A) der Maschine (1) repräsentativ ist, und einer zweiten vorgegebenen Geschwindigkeit (Ω2), die für ein Ende eines Betriebs mit konstantem Drehmoment (B) der Maschine (1) repräsentativ ist und größer als die erste vorgegebene Geschwindigkeit (Ω1) ist, liegt und wenn ein Leistungsfaktor (cos ϕ) der Maschine (1) größer als ein vorgegebener Koeffizient, vorzugsweise im Wesentlichen gleich 0,7, ist oder wenn die Drehgeschwindigkeit (Ω) zwischen der zweiten vorgegebenen Drehgeschwindigkeit (Ω2) und einer dritten vorgegebenen Drehgeschwindigkeit (Ω3), die für einen Betrieb mit konstanter Leistung (C) der Maschine repräsentativ ist und größer als die zweite vorgegebene Drehgeschwindigkeit (Ω2) ist, liegt.

8. Doppel-dreiphasige rotierende elektrische Maschine (1), **dadurch gekennzeichnet, dass** sie einen integrierten Wechselrichter (10, 14, 17) umfasst, der mit der Steuervorrichtung (17) nach einem der Ansprüche 1 bis 7 ausgerüstet ist.

## Claims

1. Device (17) for controlling a polyphase inverter (10, 14, 17) intended to supply power from a direct current source (CC) to a double three-phase rotating electrical machine (1), said device being of the type comprising means (29) for generating switching signals controlling switching elements (9, 13) so as to obtain a reduction of losses in said switching elements (9, 13) and a reduction in an rms current in a decoupling capacitor (16) of said source (CC), said double three-phase rotating electrical machine (1) including three first phase windings (2, 3, 4) and three second phase windings (5, 6, 7) forming a first three-phase system (2, 3, 4) and a second three-phase system (5, 6, 7) with separate neutral points (11, 15) offset angularly by a predetermined offset angle (θ), and said first and second phase windings (2, 3, 4; 5, 6, 7) being connected to three first and three second power arms (8, 12), respectively, formed by said switching elements (9, 13) of said one polyphase inverter (10, 14, 17), **characterized in that** it includes:
- means (29) for storing a set of at least two control strategies (21, 24) determining said switching signals;
- means for acquiring a rotation speed (Ω) and a power factor (cos ϕ) of said machine (1);
- means for selecting a current strategy from said set of control strategies (21, 24) as a function of said rotation speed (Ω) and said power factor (cos ϕ).

2. Device according to Claim 1 for controlling a polyphase inverter (10, 14, 17), **characterized in that** said set of control strategies includes a strategy consisting in applying to said first three-phase system (2, 3, 4) a first centered vectorial pulse width modulation offset by a common delay (Td) from a second centered vectorial pulse width modulation with the same period applied to said second three-phase system (5, 6, 7) .

3. Device according to Claim 1 for controlling a polyphase inverter (10, 14, 17), **characterized in that** said set of control strategies includes a strategy (21) consisting in applying to said first three-phase system (2, 3, 4) a first vectorial pulse width modulation offset by a common delay (Td) from a second vectorial pulse width modulation with the same period applied to said second three-phase system (5, 6, 7) and blocking one of said three first arms (8) and/or one of said three second arms (12), said common delay (Td) preferably being substantially equal to 25% of said period.

4. Device according to Claim 1 for controlling a polyphase inverter (10, 14, 17), **characterized in that** said set of control strategies includes a strategy (24) consisting in applying to said first three-phase system (2, 3, 4) a first generalized discontinuous pulse width modulation offset by a common delay (Td) from a second generalized discontinuous pulse width modulation with the same period applied to said second three-phase system (5, 6, 7), said common delay (Td) preferably being substantially equal to 30% of said period.

5. Device according to Claim 1 for controlling a polyphase inverter (10, 14, 17), **characterized in that** said set of control strategies includes a strategy consisting in:
- applying to said first three-phase system (2, 3, 4) a first centered vectorial pulse width modulation and to said second three-phase system (5, 6, 7) a second centered vectorial pulse width modulation with the same period and the same time origin;
- blocking one of said three first arms (8) and one of said three second arms (12);
- offsetting the first, second and third delays (Td1, Td2, Td3) relative to said time origin of the switching fronts of three of said three first arms (8) and said three second arms (12) that are not blocked.

6. Device according to Claim 3 for controlling a polyphase inverter (10, 14, 17), **characterized in that** said strategy (21) is applied if a rotation speed (Ω) of said machine (1) is less than a first predetermined speed (Ω1) representative of an end (A) of starting of said machine (1) or if said rotation speed (Ω) is between said first predetermined speed (Ω1) and a second predetermined speed (Ω2), representative of an end (B) of functioning at constant torque of said machine (1), greater than said first predetermined speed (Ω1) and if a power factor (cos ϕ) of said machine (1) is less than or equal to a predetermined coefficient, preferably substantially equal to 0.7.

7. Device according to Claim 4 for controlling a polyphase inverter (10, 14, 17), **characterized in that** said strategy (24) is applied if a rotation speed (Ω) of said machine (1) is between a first predetermined speed (Ω1) representative of an end (A) of starting of said machine (1) and a second predetermined speed (Ω2), representative of an end (B) of functioning at constant torque of said machine (1), greater than said first predetermined speed (Ω1) and if a power factor (cos ϕ) of said machine (1) is greater than a predetermined coefficient, preferably substantially equal to 0.7, or if said rotation speed (Ω) is between said second predetermined speed (Ω2) and a third predetermined speed (Ω3), representative of operation (C) at constant power of said machine, greater than said second predetermined speed (Ω2).

8. Double three-phase rotating electrical machine (1), **characterized in that** it includes an integrated inverter (10, 14, 17) provided with the control device (17) according to any one of Claims 1 to 7.
